# EUROPÄISCHE PATENTSCHRIFT

(11) **EP 3 284 975 B1**
(45) Veröffentlichungstag und Bekanntmachung des Hinweises auf die Patenterteilung: **26.02.2020**
(21) Anmeldenummer: 16184864.3
(22) Anmeldetag: 19.08.2016
(51) Int. Cl.: F16H 57/08, F16H 1/28

(54) **PLANETENACHSE**
PLANETARY AXIS
AXE PLANETAIRE

(43) Veröffentlichungstag der Anmeldung: 21.02.2018
(73) Patentinhaber: Flender GmbH, 46395 Bocholt (DE)
(72) Erfinder: Klein-Hitpass, Arno, 52074 Aachen (DE)
(74) Vertreter: Maier, Daniel Oliver

(56) Entgegenhaltungen:
- EP-A1- 2 518 371
- EP-A1- 2 559 915
- DE-A1- 2 523 725
- US-A- 2 095 794

## Beschreibung

Die vorliegende Erfindung betrifft eine Planetenachse und eine Planetengetriebestufe.
In Planetengetrieben kämmen auf Planetenachsen drehbar gelagerte Planetenräder gleichzeitig mit einem innenverzahnten Hohlrad und mit einem außenverzahnten Sonnenrad. Es ist bekannt, an den Planetenachsen ihre elastische Nachgiebigkeit verbessernde Modifikationen vorzunehmen, um konstruktions- und lastbedingte Schiefstellungen der Planetenräder relativ zu dem Hohlrad und dem Sonnenrad ausgleichen zu können.

EP 2 559 915 A1 (General Electric Company) 20.02.2013 zeigt in Fig. 4 einen Planetenbolzen ("pin") 50, der im Bereich seiner beiden Enden jeweils ein quer zur Längsachse verlaufendes Bohrloch ("bore hole") 94 aufweist. DE2523725 offenbart eine Planetenachse für ein Planetengetriebe nach dem Oberbegriffs des Anspruchs 1, bzw. des Anspruchs 2.

Aufgabe der vorliegenden Erfindung ist es, eine verbesserte Planetenachse bereitzustellen.
Diese Aufgabe wird erfindungsgemäß durch eine Planetenachse mit den in Anspruch 1 und 2 angegebenen Merkmalen gelöst.

Die Erfindung beruht auf der Erkenntnis, dass die Planetenradlagerung auf der Planetenachse eines Planetengetriebes vergleichbar ist zu einer Radaufhängung bei einem Automobil, wobei das Chassis der Planetenachse und die Straße dem Planetenträger entsprechen. Das Chassis soll auch bei einer unebenen Fahrbahn seine Lage möglichst nicht verändern. Die Planetenachse eines Planetengetriebes sollte seine Lage zum Hohlrad und zur Sonne ebenfalls nicht verändern.

Die erfinderische Lösung besteht also darin, dass im Automobilbereich bekannte Radaufhängungen auf die Planetenachse übertragen werden. Als für eine analoge Anwendung geeignet haben sich folgende Varianten der Radaufhängung erwiesen: Querlenkerachse, Schub-/Biegelenkerachse und Längslenkerachse.

Die Planetenachse ist im Vergleich zu anderen Maschinenelementen des Planetengetriebes relativ gering beansprucht, sodass an der Planetenachse geometrische Modifikationen vorgenommen werden können ohne die Grenzen der Beanspruchbarkeit zu überschreiten. Dafür werden verschiedene elastisch wirkende wegausgleichende Mechanismen genutzt, die zu einer weichen Planetenradaufhängung führen.

Bei einer Doppelquerlenker-Radaufhängung im Automobilbereich schwingen zwei am Gestell gelagerte Glieder (sogenannte Querlenker oder Querlenkerarme) quer zur Fahrtrichtung (Doppelschwinge). Dem Gestell entspricht bei einem Planetengetriebe der Planetenträger. Gegenüber dem Fahrzeugmechanismus sind die Querlenker bei der Planetenachse jedoch nicht gelenkig gelagert sondern biegesteif; in diesem Fall übernehmen sie gleichzeitig die Federfunktion, welches sonst ein separates Feder-Dämpferelement übernimmt. Die Lenker verbinden den Einspannbereich und Lagersitzbereich der Planetenachse. Durch Variation der Lenkerlängen und -querschnitte kann der Steifigkeit und somit Art der Einlenkung des Systems variiert werden. Die Planetenachse hat über die quer zur Längsachse verlaufenden Durchgangsöffnungen eine variable Schubsteifigkeit. Die Lenkerachse erzeugt Relativverschiebungen von Lagersitzbereichen durch Lenkerelemente.

Der Einfach-Schub-/Biegelenker gleicht ebenfalls Steifigkeitsunterschiede in Umfangsrichtung aus. Die erfinderische Lösung ist dadurch gekennzeichnet, dass die Planetenachse zwischen den Einspannbereichen zumindest einseitig so ausgeklinkt ist, dass ein Schub-/Biegelenker entsteht. Durch eine geschickte Wahl von Querschnitt und Länge des erzeugten Profils kann die Auslenkung gesteuert werden. Diese Variante hat Vorteile, wenn infolge einer Verformung der Planetenträgerwangen eine starke Schiefstellung der Planetenachsbohrungen vorliegt. Diese Variante erzeugt jedoch ein Biegemoment in der Achsaufnahme.

Die Übertragung der aus dem Automobilbereich bekannten Längslenkerachse-Mechanik auf die Planetenaufhängung ist dadurch gekennzeichnet, dass die Schwerachse des Lenkerbereichs exzentrisch zur Schwerachse des Lagersitzbereichs und/oder zu der Schwerachse des Auflager/Einspannbereichs ausgeführt ist. Durch elastisches Tordieren des Lenkerbereichs kann der Planet Kreisbahnbewegungen um die Schwerachse des exzentrischen Körpers ausführen, wobei der Radius der Kreisbahn dem Abstand der Schwerachsen der beiden Körper entspricht.

Vorteilhafte Ausgestaltungen und Weiterbildungen der Erfindung sind in den abhängigen Ansprüchen angegeben.

Gemäß der Erfindung ist die Planetenachse analog zu einer Querlenkerachse ausgebildet und weist zwischen einem Einspannungsbereich zum Einspannen in eine Planetenträgerwange und einem Lagersitzbereich zur Aufnahme eines Planetenlagers einen Lenkerbereich mit zumindest einer quer zur Planetenachse verlaufenden Durchgangsöffnung und zumindest zwei den Einspannungsbereich und den Lagersitzbereich verbindenden Querlenkerarmen auf.
Gemäß einer bevorzugten Ausgestaltung der Erfindung ist die Planetenachse analog zu einer Schub-/Biegelenkerachse ausgebildet und weist zwischen einem Einspannungsbereich zum Einspannen in eine Planetenträgerwange und einem Lagersitzbereich zur Aufnahme eines Planetenlagers einen Lenkerbereich mit einem Balken auf.

Gemäß der Erfindung ist die Planetenachse analog zu einer Längslenkerachse ausgebildet und weist zwischen einem Einspannungsbereich zum Einspannen in eine Planetenträgerwange und einem Lagersitzbereich zur Aufnahme eines Planetenlagers einen Lenkerbereich auf, wobei die Schwerachse des Lenkerbereichs exzentrisch zur Schwerachse des Lagersitzbereichs und/oder zur Schwerachse des Einspannbereichs ausgebildet ist.
Außerdem wird die Aufgabe gelöst durch eine Planetengetriebestufe mit einer erfindungsgemäßen Planetenachse.
Gemäß einer bevorzugten Ausgestaltung der Planetengetriebestufe ist im Falle einer analog zu einer Querlenkerachse ausgebildeten Planetenachse die Durchgangsöffnung senkrecht zu einer Umlaufbahn der Planetenachse ausgerichtet.
Gemäß einer bevorzugten Ausgestaltung der Planetengetriebestufe verläuft im Falle einer analog zu einer Schub-/Biegelenkerachse ausgebildeten Planetenachse die Ebene des Balkens radial zu einem Sonnenrad der Planetengetriebestufe.
Gemäß einer bevorzugten Ausgestaltung der Planetengetriebestufe ist im Falle einer analog zu einer Längslenkerachse ausgebildeten Planetenachse die Schwerachse des Lenkerbereichs exzentrisch radial zu einem Sonnenrad der Planetengetriebestufe ausgebildet.
Die Querlenker können unterschiedliche Längen und Querschnitte haben. Von Vorteil ist dabei, dass die Federsteifigkeit der Querlenker eingestellt werden kann.
Der Übergang der Lenker zu den Nachbarbereichen ist kann mit Radien oder elliptischer Ausrundungen versehen sein. Von Vorteil ist dabei, dass keine Spannungsspitzen entstehen bzw. Spannungsspitzen gemindert werden.

Gemäß einer bevorzugten Ausgestaltung der Erfindung ist die Achse so gestaltet das unter Last die Achse selbst geführte/gerichtete elastische translatorisch und/oder rotatorische Verlagerungen der Teilbereiche zueinander erzeugt. Von Vorteil ist dabei, dass gezielt gewünschte Auslenkungen der Achse zum Ausgleich von Achsschränkungs- und Achsneigungsfehlern eingestellt werden können.

Gemäß einer bevorzugten Ausgestaltung der Erfindung ist zur Verbreiterung des Lagersitzbereichs zwischen dem Lagersitz der Achse und den Lagern (Wälz- oder Gleitlager) eine Distanzhülse mit möglichst hoher Steifigkeit zwischengeschaltet. Von Vorteil ist dabei, dass dadurch längere Querlenkerarme bei gleichem Bauraum in Bezug auf herkömmliche Ausführungen möglich sind. Somit kann eine erhöhte Auslenkung erreicht werden. Durch eine hohe Steifigkeit wird eine gleichmäßige Kraftaufteilung im Lager über dessen Breite erreicht.

Gemäß einer bevorzugten Ausgestaltung der Erfindung besteht die Achse aus einem oder mehreren beliebigen gleichförmigen Profilen. Von Vorteil ist dabei, dass diese einfach herzustellen sind.

Gemäß einer bevorzugten Ausgestaltung der Erfindung ist der Lenkermechanismus stoff- und/oder form- und/oder kraftschlüssig hergestellt. Von Vorteil ist dabei, dass der Lenkermechanismus aus Körpern unterschiedlicher verschiedener Materialen zusammengesetzt werden kann. Des Weiteren ist ein aus mehreren Elementen gefügter Lenkermechanismus vorteilhaft für die Montage.

Gemäß einer bevorzugten Ausgestaltung der Erfindung hat die Achse mindestens einen Sprung im Schubsteifigkeitsverlauf quer zur Achse. Das ist eine Eigenschaft der Achse. Von Vorteil ist, dass man auf kleinem Bauraum höhere Verformungen gegenüber Achsen mit stetiger Schubsteifigkeit erreicht. Der Grund dafür liegt darin, dass sich Schub- und Biegesteifigkeit überlagern und bei kurzen Körpern die Schubsteifigkeit dominant gegenüber der Biegesteifigkeit ist.

Gemäß einer bevorzugten Ausgestaltung der Erfindung sind die äußeren Abmaße (Durchmesser) des Lenkerbereichs geringer als die des Einspannbereichs oder Lagersitzbereichs ausgeführt. Von Vorteil ist dabei, dass Hülsen ohne Absatz verwendet werden können.

Gemäß einer bevorzugten Ausgestaltung der Erfindung können durch eine Variation von Lenkerbalkenlängen und -höhen (Lenkerprofile) und deren Position über die Höhe der Achse die Steifigkeits- und Verformungseigenschaften der Achse eingestellt werden. Von Vorteil ist dabei, dass zum einen das Einschmiegen der Achse in die Planetenachsbohrung und zum anderen die Neigung der Achse relativ zum Planetenträger eingestellt werden kann. Beim Automobil wird dadurch der Sturz eingestellt.

Gemäß einer bevorzugten Ausgestaltung der Erfindung ist die Planetenachse als ein einfacher Schub-/Biegelenker ausgeführt. Von Vorteil ist dabei, dass die Achse zwischen Einspannbereich und Lagersitz elastische translatorische und rotatorische Auslenkungen ermöglicht.

Gemäß einer bevorzugten Ausgestaltung der Erfindung ist die Planetenachse als ein mehrfacher Schub-/Biegelenker ausgeführt. Von Vorteil ist dabei, dass zwischen Einspannstelle und Lagersitz zumindest zwei gerichtete Steifigkeitseigenschaften ausgebildet und somit Achsneigungs- und Achsschränkungsfehler ausgeglichen werden können.

Gemäß einer bevorzugten Ausgestaltung der Erfindung erfolgt die Auflagerung/Einspannung der Achse einseitig, beidseitig oder mittig. Von Vorteil ist dabei, dass die Achse in einem Planetenträger mit einer Wange, in einem herkömmlichen mit zwei Wangen oder einem mit mittigliegender Wange, ähnlich einem Bogie-Plate, genutzt werden kann.

Gemäß einer bevorzugten Ausgestaltung der Erfindung ist die Achse form- und/oder kraftschlüssig gegen Verdrehen im Planetenträger gesichert. Von Vorteil ist dabei, dass hierdurch ein Verdrehen oder axiales Wandern der Achse im Planetenträger vermieden wird.

Gemäß einer bevorzugten Ausgestaltung der Erfindung ist die Achse des Lagersitzes zur Schwerachse des Exzenterprofils exzentrisch angeordnet. Von Vorteil ist dabei, dass der Lagersitz gegenüber der Einspannstelle um die Schwerachse des Exzenterbereichs eine elastische Schwenkbewegung ausführen kann.

Gemäß einer bevorzugten Ausgestaltung der Erfindung hat die Achse kegelige Bereiche. Von Vorteil ist dabei, dass mit ebenfalls kegelig ausgeführten Gegenkörpern Kegelpresssitze realisiert werden können.

Gemäß einer bevorzugten Ausgestaltung der Erfindung ist im Falle einer analog zu einer Längslenkerachse ausgebildeten Planetenachse die Schwerachse des Lenkerbereichs exzentrisch zur Mittelachse der Planetenachse ausgebildet, wobei eine durch Schwerachse und Mittelachse aufgespannte Ebene beliebig ausgerichtet sein kann, bevorzugt tangential oder senkrecht zur Kreisbahn des Planeten.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu
- Fig. 1: eine Vorderansicht einer einseitig eingespannten Achse mit einem Doppelquerlenkermechanismus;
- Fig. 2: eine Draufsicht der Achse gemäß Fig. 1;
- Fig. 3: einen Schnitt III-III der Achse gemäß Fig. 1;
- Fig. 4: eine Vorderansicht einer zweiseitig eingespannten Achse mit einem Doppelquerlenkermechanismus;
- Fig. 5: eine Draufsicht der Achse gemäß Fig. 4;
- Fig. 6: einen Schnitt VI-VI der Achse gemäß Fig. 4;
- Fig. 7: eine perspektivische Ansicht einer zweiseitig eingespannten Achse mit einem Doppelquerlenkermechanismus mit unterschiedlich ausgebildeten Lenkern;
- Fig. 8: eine erste Ausgestaltung einer Planetenlagerung mit Doppelquerlenker;
- Fig. 9: eine weitere Ausgestaltung einer Planetenlagerung mit Doppelquerlenker;
- Fig. 10: eine weitere Ausgestaltung einer Planetenlagerung mit Doppelquerlenker;
- Fig. 11: eine weitere Ausgestaltung einer Planetenlagerung mit Doppelquerlenker;
- Fig. 12: eine Einfederung einer Planetenachse mit Doppelquerlenkermechanismus bei koaxialer Auflagerung;
- Fig. 13: eine Einfederung einer Planetenachse mit Doppelquerlenkermechanismus bei exzentrischer Ausrichtung der Auflager;
- Fig. 14: eine Vorderansicht einer zweiseitig eingespannten Achse mit einem Mehrlenkermechanismus;
- Fig. 15: eine Draufsicht der Achse gemäß Fig. 14;
- Fig. 16: einen Schnitt XVI-XVI der Achse gemäß Fig. 14;
- Fig. 17: eine Vorderansicht einer zweiseitig eingespannten Achse mit einem Schub-/Biegelenkermechanismus;
- Fig. 18: eine Draufsicht der Achse gemäß Fig. 17;
- Fig. 19: einen Schnitt XIX-XIX der Achse gemäß Fig. 17;
- Fig. 20: eine Vorderansicht einer zweiseitig eingespannten Achse mit einem Längslenkermechanismus;
- Fig. 21: eine Draufsicht der Achse 100 gemäß Fig. 20;
- Fig. 22: einen Schnitt XXII-XXII der Achse 100 gemäß Fig. 20;
- Fig. 23: eine Ausgestaltung einer wälzgelagerten Planetenlagerung mit Längslenker ohne Distanzhülse;
- Fig. 24: einen Schnitt XXIV-XXIV der Achse 100 gemäß Fig. 23;
- Fig. 25: einen Schnitt durch eine weitere Ausgestaltung eines Längslenker-Profils;
- Fig. 26: einen Schnitt durch eine weitere Ausgestaltung eines Längslenker-Profils; und
- Fig. 27: einen Schnitt durch eine Ausgestaltung eines geteilten Längslenker-Profils;
- Fig. 28: Fig. 28 zeigt einen Querschnitt durch Lenkerbereiche 2 von Planetenachsen.

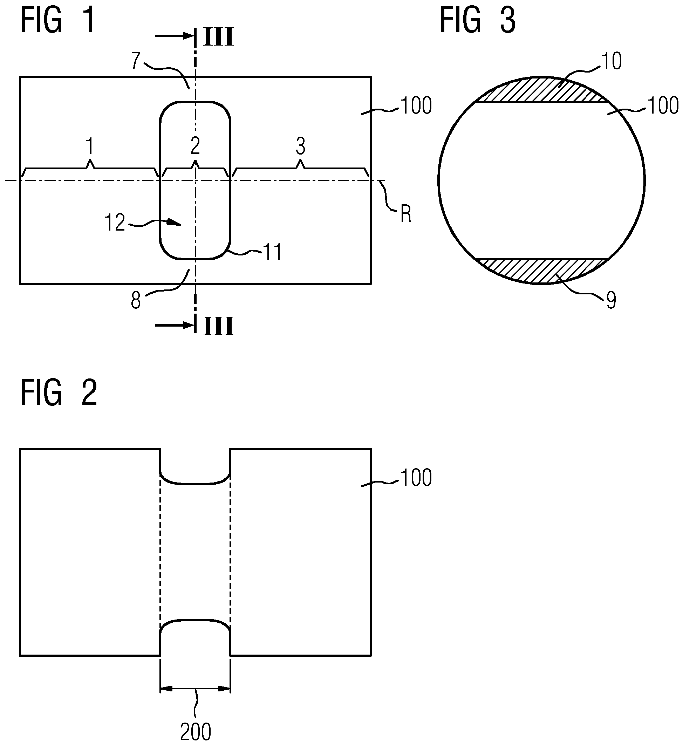

Fig. 1 bis 3 zeigen eine einseitig eingespannte Achse mit einem Doppelquerlenkermechanismus. Die Achse zur Lagerung von Zahnrädern ist so modifiziert, dass Sie einen relativen Sprung in der Schubsteifigkeit aufweist, sodass sich zumindest zwei Teilbereiche parallel zueinander elastisch verlagern können. Die vorwiegend gestalterische Lösung besteht dabei zumindest aus einem Auflager-/Einspannbereich 1 zur Auflagerung bzw. Einspannung der Planetenachse in einem Planetenträger, einem Lenkerbereich 2 mit einer definierten axialen Länge 200 und einem Lagersitzbereich 3 mit einem Lagersitz zur Lagerung/Aufnahme des Lagers. Der Lenkerbereich 2 hat zumindest eine Durchgangsöffnung 12 mit einem beliebigen Querschnitt quer zu Mittelachse R. Das Material der Planetenachse 100, welches nach dem Herstellen der Durchgangsöffnung 12 im Lenkerbereich 2 stehenbleibt, bildet zumindest zwei Querlenkerarme 7, 8, welche die Bereiche 1 und 3 verbinden. Die Querlenkerarme 7, 8 können einen beliebigen Querschnitt 9, 10 aufweisen. Durch ungleiche Gestaltung der Lenkerlängen kann zusätzlich eine definierte Neigung der Achsen des Bereichs 1 zu dem Bereich 3 erzeugt bzw. zur Parallelverschiebung überlagert werden. Der Übergang der Lenker 7, 8 zu den Nachbarbereichen ist vorzugsweise mit Radien oder elliptischer Ausrundung 11 versehen. Der Durchmesser des Lenkerbereichs 2 kann geringer als der Durchmesser des Einspannbereichs 1 oder des Lagersitzbereichs 3 sein. Dies ist notwendig, damit die Lenker 7, 8 beim Auslenken nicht mit einer optionalen Distanzhülse kollidieren.

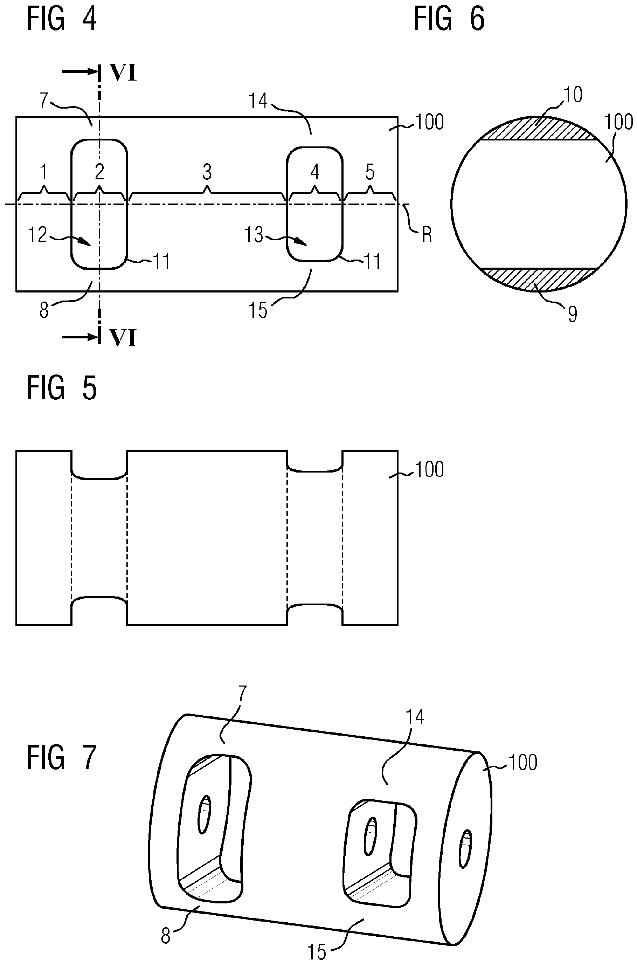

Fig. 4 bis 6 zeigen eine zweiseitig eingespannte Achse mit einem Doppelquerlenkermechanismus. Die Achse zur Lagerung von Zahnrädern hat zur Fixierung in einem zweiwangigen Gestell, d.h. dem zweiwangigen Planetenträger, an beiden Enden jeweils einen Einspannbereich 1, 5, einen mittig liegenden Bereich 3 mit dem Lagersitz und jeweils zwischen Einspannbereich 1, 5 und Lagersitz 3 einen Querlenkerbereich 2, 4. Die Querlenker 7, 8, 14, 15 entstehen durch die Einbringung von zwei quer zu Mittelachse R liegenden Durchgangsöffnungen 12, 13. Die Querlenker 7, 8, 14, 15 erlauben eine elastische Parallelverschiebung des Mittelbereichs 3 zu den beiden Einspannbereichen 1, 5. Durch Variation der Lenkerquerschnitte 9, 10 kann die Auslenkung der Achsbereiche 1, 3, 5 eingestellt werden. Durch eine ungleiche Gestaltung der Lenkerlängen kann eine definierte Verschiebung mit einer überlagerten definierten Neigung des Mittelbereichs 3 zu den Bereichen 1 und 5 eingestellt werden. Die Lenker 7, 8, 14, 15 können unterschiedliche Querschnitte und Längen haben. Der Übergang der Lenker 7, 8, 14, 15 zu den Nachbarbereichen 1, 3, 5 ist vorzugsweise mit Radien oder elliptischen Ausrundungen 11 versehen. Der Durchmesser des Lenkerbereichs 2, 4 kann geringer als der der Einspannbereiche 1, 5 oder des Lagersitzbereichs 3 ausgeführt sein. Dies ist notwendig, damit die Lenker 7, 8, 14, 15 beim Auslenken nicht mit einer optionalen Distanzhülse kollidieren.

Fig. 7 zeigt eine perspektivische Ansicht einer zweiseitig eingespannten Achse mit einem Doppelquerlenkermechanismus mit unterschiedlich ausgebildeten Lenkern 7, 8, 14, 15.

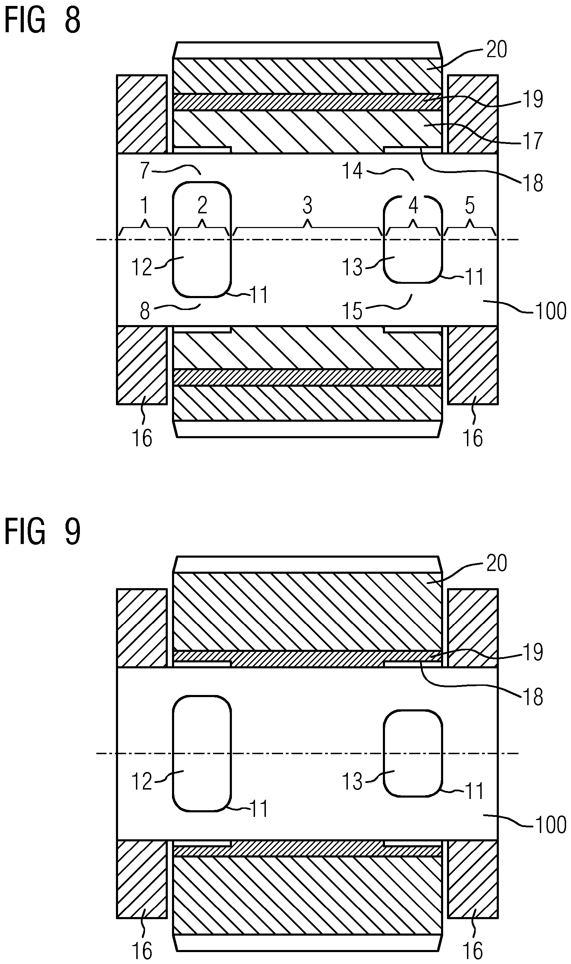

Fig. 8 zeigt eine erste Ausgestaltung einer Planetenrad-Gleitlagerung mit Doppelquerlenker und Distanzhülse 17. Eine Planetenachse 100 ist mit ihren an den Enden der Planetenachse 100 gelegenen Einspannungsbereichen 1, 5 in zwei Planetenträgerwangen 16 eingespannt. Der dazwischen frei liegende Bereich der Planetenachse 100 unterteilt sich in einen axial mittleren Lagersitzbereich 3 sowie zwei jeweils zwischen dem Lagersitzbereich 3 und den Einspannungsbereichen 1, 5 liegenden Lenkerbereichen 2, 4. Dabei weisen die Lenkerbereiche 2, 4 jeweils eine quer zur Planetenachse verlaufende Durchgangsöffnung 12, 13 auf. Die beiden Durchgangsöffnungen 12, 13 haben unterschiedliche Querschnitte, so dass die Lenker 7, 8, 14, 15 an beiden Durchgangsöffnungen 12, 13, d.h. die in den Lenkerbereichen 2, 4 verbleibenden Stege der Planetenachse 100, ebenfalls verschieden breit sind. Der Schnitt A-A ist in Fig. 6 dargestellt. Durch Variation der Längen und Querschnitte der Durchgangsöffnungen 12, 13 und korrespondierend der Lenker 7, 8, 14, 15 kann die Steifigkeit und somit die Art der Einlenkung der Planetenachse 100 variiert werden.

Zwischen den Planetenträgerwangen 16 sitzt auf der Planetenachse 100 eine Distanzhülse 17, die wiederum von einer Gleitlagerhülse 19 und einem Planetenrad 20 umgeben ist. Dabei weist die Distanzhülse 17 an ihrem inneren Durchmesser an jedem Ende jeweils einen Hinterschnitt 18 auf, so dass die Distanzhülse 17 in den Lenkerbereichen 2, 4 die Planetenachse 100 nicht berührt. Auf diese Weise berührt die Distanzhülse 17 die Planetenachse 100 nur im mittleren Lagersitzbereich 3, während in den benachbarten Lenkerbereichen 2, 4 die Distanzhülse 17 von der Planetenachse 100 radial beabstandet ist. Die radiale Beabstandung im Bereich der Lenkerbereichen 2, 4 dient dazu, der Planetenachse 100 eine radiale Verlagerung bzw. Verformung in den Lenkerbereichen 2, 4 zu erlauben.

Fig. 9 zeigt eine Ausgestaltung einer Planetenrad-Gleitlagerung mit Doppelquerlenker und ohne Distanzhülse. Die in Fig. 9 dargestellte Ausführung entspricht weitgehend der in Fig. 8 gezeigten Ausgestaltung, mit dem Unterschied, dass die in Fig. 9 gezeigte Ausgestaltung ohne eine Distanzhülse 17 ausgeführt ist. Stattdessen sitzt die Gleitlagerhülse 19 direkt auf der Planetenachse 100, wobei allerdings - analog wie bei der in Fig. 8 gezeigten Ausgestaltung - die Gleitlagerhülse 19 an ihrem inneren Durchmesser an jedem Ende jeweils einen Hinterschnitt 18 aufweist, so dass die Gleitlagerhülse 19 in den Lenkerbereichen 2, 4 die Planetenachse 100 nicht berührt.

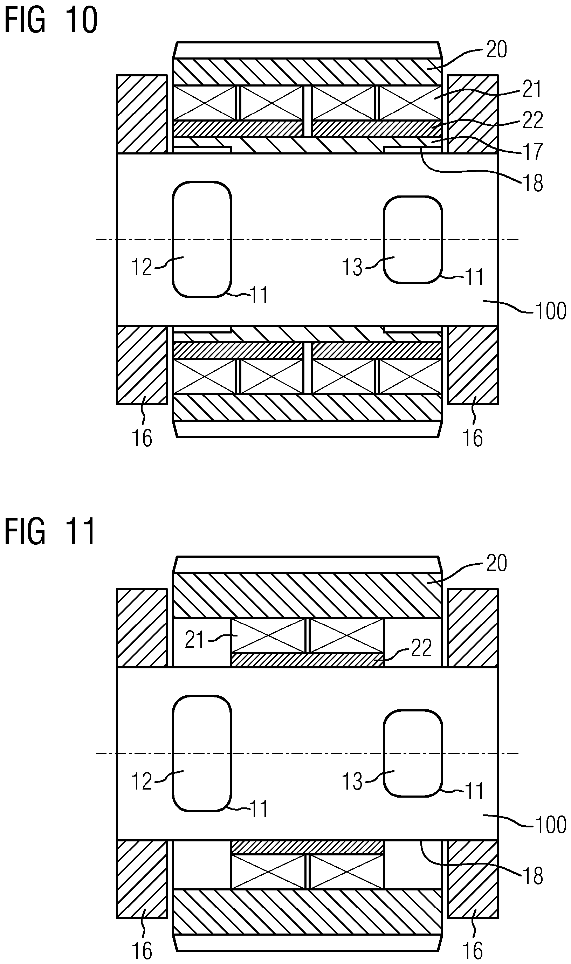

Fig. 10 zeigt eine Ausgestaltung einer Planetenrad-Wälzlagerung mit Doppelquerlenker und Distanzhülse. Die in Fig. 10 dargestellte Ausführung entspricht weitgehend der in Fig. 8 gezeigten Ausgestaltung, mit dem Unterschied, dass die in Fig. 10 gezeigte Ausgestaltung anstelle der Gleitlagerhülse 19 einen Lagerinnenring 22 und Wälzlager 21 aufweist.

Fig. 11 zeigt eine Ausgestaltung einer Planetenrad-Wälzlagerung mit Doppelquerlenker und ohne Distanzhülse. Die in Fig. 11 dargestellte Ausführung entspricht weitgehend der in Fig. 10 gezeigten Ausgestaltung, mit dem Unterschied, dass die in Fig. 11 gezeigte Ausgestaltung ohne eine Distanzhülse 17 ausgeführt ist. Stattdessen sitzen die Lagerinnenringe 22 direkt auf der Planetenachse 100, wobei allerdings die Lagerinnenringe 22 und die die Lagerinnenringe 22 umgebenden Wälzlager 21 ausschließlich in dem mittleren Lagersitzbereich 3 angeordnet sind. Die radiale Verlagerung bzw. Verformung der Planetenachse 100 in den Lenkerbereichen 2, 4 ist gegenüber dem sich dadurch ergebenden Freiraum zwischen der Planetenachse 100 und dem Planetenrad 20 vernachlässigbar.

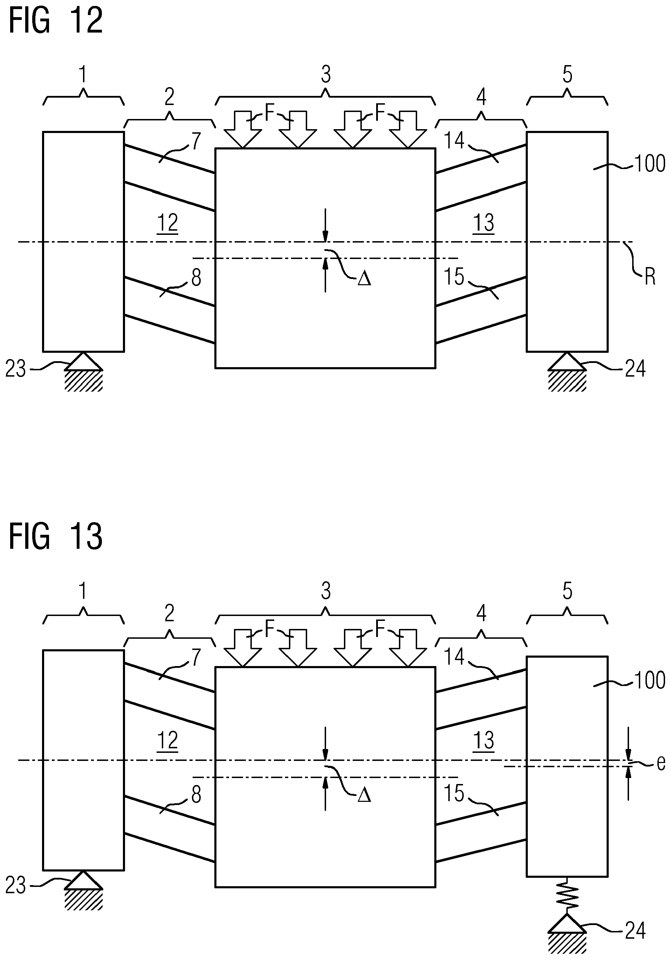

Fig. 12 zeigt schematisch die sich in einer Positionsänderung Δ des Lagersitzbereichs 3 der Planetenachse 100 widerspiegelnde Einfederung der Planetenachse 100 unter Last F bei koaxiale ausgeführte Auflagern 23, 24. Das Planetenachs-System federt sich dabei symmetrisch ein. Der Wälzlagersitz 3 lenkt waagerecht aus, um die Wegdifferenz Δ.

Fig. 13 zeigt vereinfacht die Auslenkung der Planetenachse 100 für den Fall exzentrisch positionierter Auflager 23, 24, z.B. im Falle eines tordierten Planetenträgers. Die weichen Querbiegelenker 7, 8, 14, 15 können die Relativverlagerung e in dem Auflager 24 ausgleichen, der Lagersitz 3 bleibt ebenfalls waagerecht. Dies gilt für den Fall, dass die Einspannbereiche 1, 5 der Planetenachse 100 biegesteif eingespannt sind. Je nach Biege-/Schubsteifigkeit der Lenker stellen sich unterschiedliche Reaktionskräfte in der Einspannung ein. Sind die Einspannbereiche 1, 5 nicht biegesteif eingespannt, so ist die Biege-/Schubsteifigkeit der rechten Lenker 14, 15 zu der der linken 7, 8 auf die gewünschte translatorische Auslenkung einzustellen. Die Reaktionskraft in den Einspannstellen 1, 5 ist diesem Fall nahezu gleich.

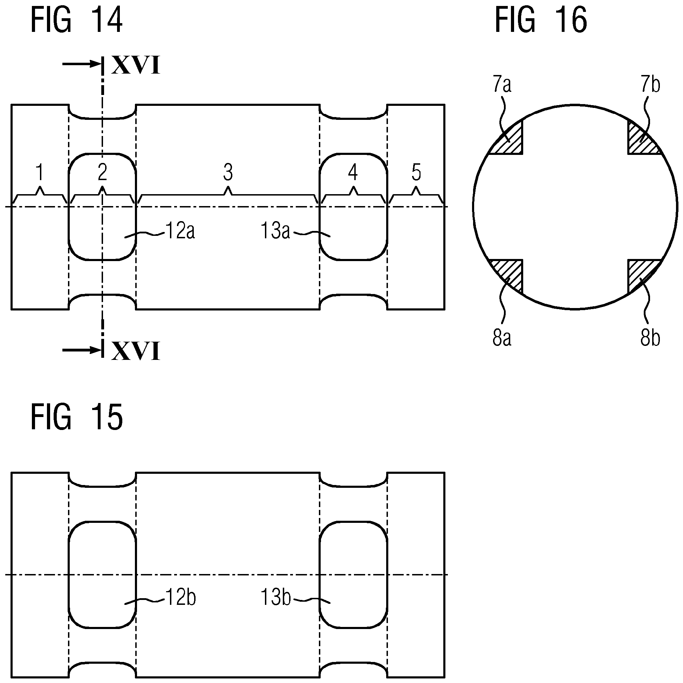

Fig. 14 bis 16 zeigen eine zweiseitig eingespannte Achse mit einem erweiterten Doppelquerlenkermechanismus: Fügt man der Planetenachse 100 in den Querlenkerbereichen 2, 4 eine weitere Durchgangsöffnung 12b, 13b senkrecht zur den ersten Durchgangsöffnungen 12a, 13a, ebenfalls quer zur Achse, hinzu, so erhält man eine Mehrlenkervariante. Die Planetenachse 100 hat nun die Eigenschaft, in einer weiteren Ebene eine geführte elastische Verformung ausführen zu können. In dieser erweiterten Ausführung der Querlenker-Planetenradaufhängung können neben Achsschränkungsfehler auch Achsneigungsfehler ausglichen werden.

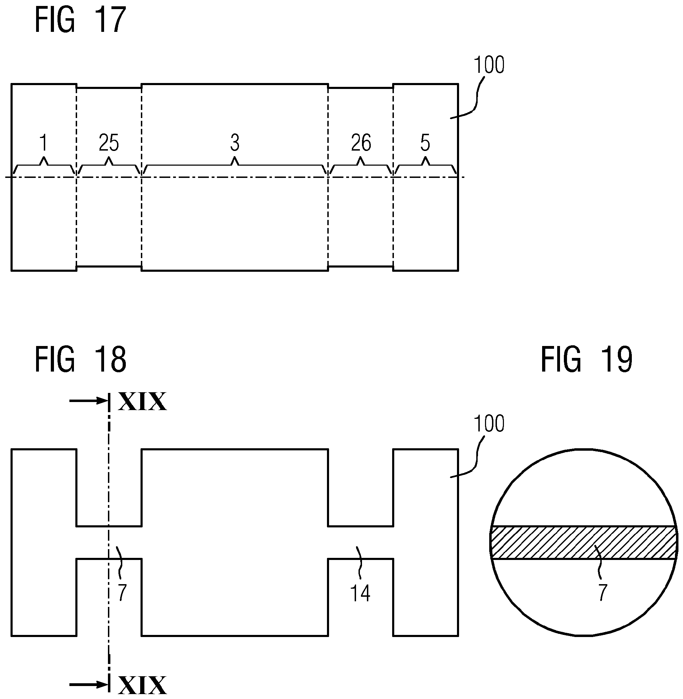

Fig. 17 bis 19 zeigen eine zweiseitig eingespannte Planetenachse mit einfachem Schub-/Biegelenkermechanismus. Die Planetenachse 100 weist auf an einem ersten Ende einen ersten Bereich 1 zu Auflagerung/Einspannung im Planetenträger, daran anschließend einen ersten Schub-/Biegelenker 25, daran anschließend einen Lagersitzbereich 3 zur Aufnahme des Zahnrads mit zugehörigem Lagerungsmechanismus, daran anschließend einen zweiten Schub-/Biegelenker 26 und daran anschließend an einem anderen Ende einen zweiten Bereich 5 zu Auflagerung/ Einspannung im Planetenträger.

Je dünner die Balken, d.h. die ersten und zweiten Schub-/ Biegelenker 25, 26, desto geringer ist die Verdrillsteifigkeit. Durch die relative Verdrehung der beiden Planetenträgerwangen zueinander erfolgt auch ein relatives Verdrehen der beiden gegenüberliegenden Planetenachsbohrungen. Dieses relative Verdrehen der Achsaufnahmen kann somit durch die Planetenachse 100 elastisch ausgeglichen werden, und somit Mikroschlupf zwischen Achse und Planetenachsbohrung vermieden werden.

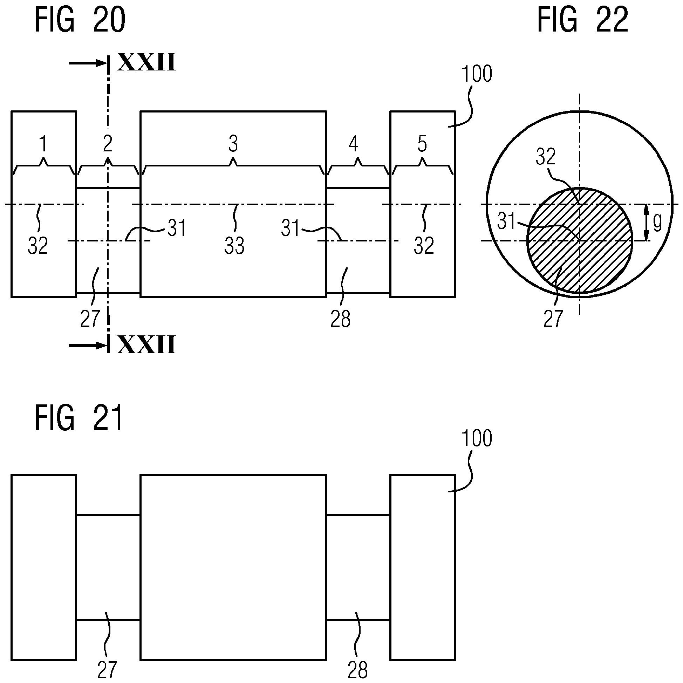

Fig. 20 bis 22 zeigen eine konstruktive Ausführung einer Längslenkerachse. Die Planetenachse 100 weist auf an einem ersten Ende einen ersten Bereich 1 zu Auflagerung/Einspannung im Planetenträger, daran anschließend einen ersten Längslenkerbereich 2 mit einem exzentrisch liegenden Profil 27, daran anschließend einen Lagersitzbereich 3 zur Aufnahme des Zahnrads mit zugehörigem Lagerungsmechanismus, daran anschließend einen zweiten Längslenkerbereich 4 mit einem exzentrisch liegenden Profil 28, und daran anschließend an einem anderen Ende einen zweiten Bereich 5 zu Auflagerung/Einspannung im Planetenträger. Die Schwerachse 31 der Lenkerbereiche 27, 28 liegt in der dargestellten Ausgestaltung ungefähr im Bereich der Mittenachse der exzentrisch liegenden Profile 27, 28. Die Schwerachse 32 der Einspannbereiche 1, 5 liegt ungefähr im Bereich der Mittenachse der Planetenachse 100, ebenso wie die Schwerachse 33 des Lagersitzbereichs 3.

Eine Achse 100 zur Lagerung von Zahnrädern hat zur Fixierung in einem zweiwangigen Gestell, d.h. dem Planetenträger, an beiden Enden einen Einspannbereich 1, 5, einen mittig liegenden Bereich 3 mit dem Lagersitz und jeweils zwischen Einspannbereich 1, 5 und Lagersitzbereich 3 einen Längslenkerbereich 2 und 4. Die Längslenkerachse ist dadurch gekennzeichnet, dass jeweils der Lagersitzbereich 3 und der Einspannbereich 1, 5 durch einen Lenkerbereich 2, 5 mit beliebigem Profil, dessen Schwerachse 31 exzentrisch zur Schwerachse 33 des Lagerbereichs 3 liegt, verbunden sind. Der Lagersitzbereich 3 kann nun eine elastische Drehbewegung um die Schwerachse 31 der Lenkerbereiche 2, 4 auf einer Kreisbahn, dessen Radius dem Abstand g der Schwerachsen 31, 33 entspricht, ausführen. Prinzipiell ist es auch möglich die Einspannbereiche 1 und 5 wegzulassen und die Exzenterprofile 27, 28 direkt im Planetenträger beliebig zu fixieren.

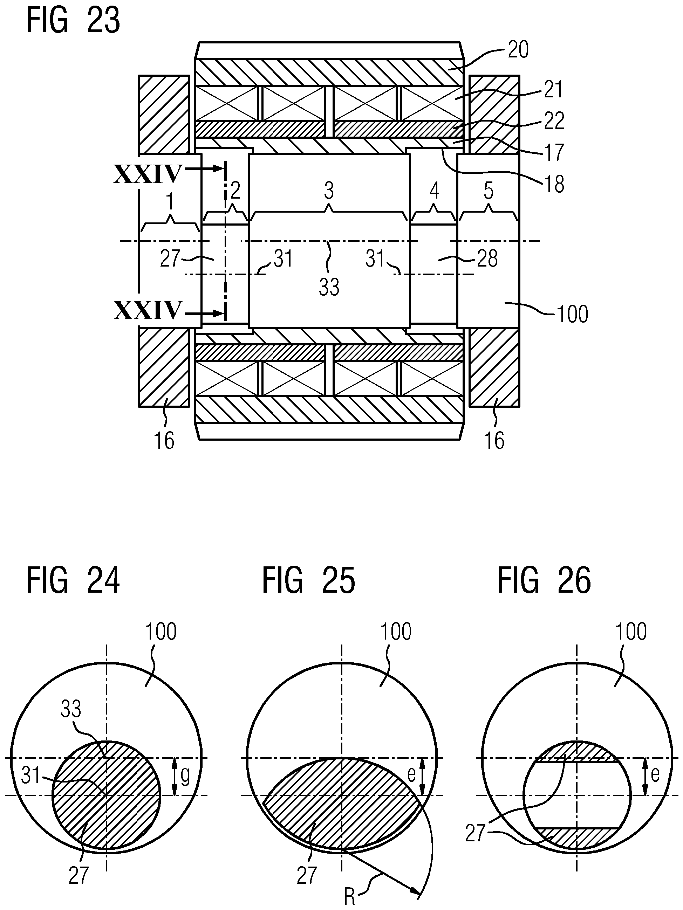

Fig. 23 und 24 zeigen eine Ausgestaltung einer wälzgelagerten Planetenlagerung mit Längslenker und Distanzhülse 17. Eine Planetenachse 100 ist mit ihren an den Enden der Planetenachse 100 gelegenen Einspannungsbereichen 1, 5 in zwei Planetenträgerwangen 16 eingespannt. Der dazwischen frei liegende Bereich der Planetenachse 100 unterteilt sich in einen axial mittleren Lagersitzbereich 3 sowie zwei jeweils zwischen dem Lagersitzbereich 3 und den Einspannungsbereichen 1, 5 liegenden Lenkerbereichen 2, 4. Dabei weisen die Lenkerbereiche 2, 4 jeweils ein in Bezug auf das Schwerachse 33 des Lagersitzbereichs 3 exzentrisch angeordnetes Profil 27, 28 auf. Der Versatz g gibt die Distanz zwischen der Schwerachse 33 des Lagersitzbereichs 3 und der Schwerachse 31 der Lenkerbereiche 2, 4 an. Der Schnitt A-A des ersten Profils 27 ist in Fig. 24 dargestellt. Durch Variation der Profile 27, 28 kann die Steifigkeit und somit die Art der Einlenkung der Planetenachse 100 variiert werden.

Zwischen den Planetenträgerwangen 16 sitzt im Lagersitzbereich 3 eine Distanzhülse 17, die wiederum Lagerinnenringen 22, Wälzlagern 21 und einem Planetenrad 20 umgeben ist. Dabei weist die Distanzhülse 17 an ihrem inneren Durchmesser an jedem Ende jeweils einen Hinterschnitt 18 auf, so dass die Distanzhülse 17 in den Lenkerbereichen 2, 4 die Planetenachse 100, genauer: die exzentrischen Profile 27, 28, nicht berührt. Auf diese Weise berührt die Distanzhülse 17 die Planetenachse 100 nur im mittleren Lagersitzbereich 3, während in den benachbarten Lenkerbereichen 2, 4 die Distanzhülse 17 von der Planetenachse 100 radial beabstandet ist. Die radiale Beabstandung im Bereich der Lenkerbereichen 2, 4 dient dazu, der Planetenachse 100 eine radiale Verlagerung bzw. Verformung in den Lenkerbereichen 2, 4 zu erlauben.

Die Längslenker-Variante kann, analog zu den oben beschriebenen Querlenker-Varianten, auch ohne Distanzhülse 17 ausgeführt sein, alternativ gleitgelagert mit und ohne Distanzhülse 17.

Fig. 25 und 26 zeigen jeweils einen Schnitt durch eine weitere Ausgestaltung eines Längslenker-Profils 27, welches in den Lenkerbereichen 2, 4 einer Planetenachse ausgebildet ist. Dabei ist das in Fig. 25 dargestellte Profil 27 ein Längslenkerprofil, wohingegen das in Fig. 26 dargestellte Profil 27 ein Doppelquer-Längslenkerprofil ist.

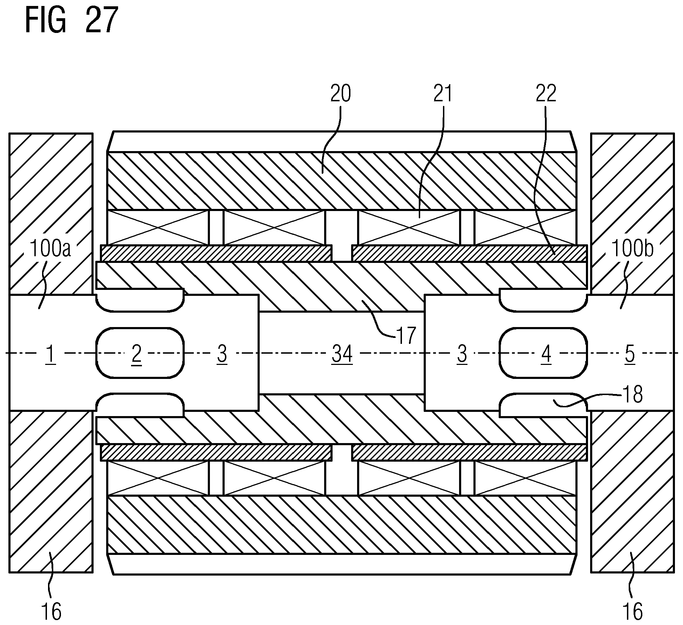

Fig. 27 zeigt einen Schnitt durch eine Ausgestaltung eines geteilten Lenker-Profils. Im Zusammenhang mit einer Distanzhülse 17 und einem zweiwangigen Planetenträger ist eine geteilte Konstruktion für Quer- und für Längslenker mit zwei Einfach-Lenkern ausführbar. Die Ausgestaltung folgt weitgehend der Ausgestaltung gemäß Fig. 10, allerdings mit den Unterschieden, dass die Lenkerprofile in den Lenkerbereichen 2 und 4 gemäß Fig. 16 ausgebildet sind und dass der Lagersitzbereich 3 mit Lagersitz durch einen Freiraum 34 unterbrochen ist, mit anderen Worten: Die Planetenachse 100 besteht aus zwei Hälften, welche sich axial nicht berühren. Diese Konstruktion kann auch als zwei separate Planetenachsen 100a, 100b mit Einfach-Lenkern 2, 4 gesehen werden.

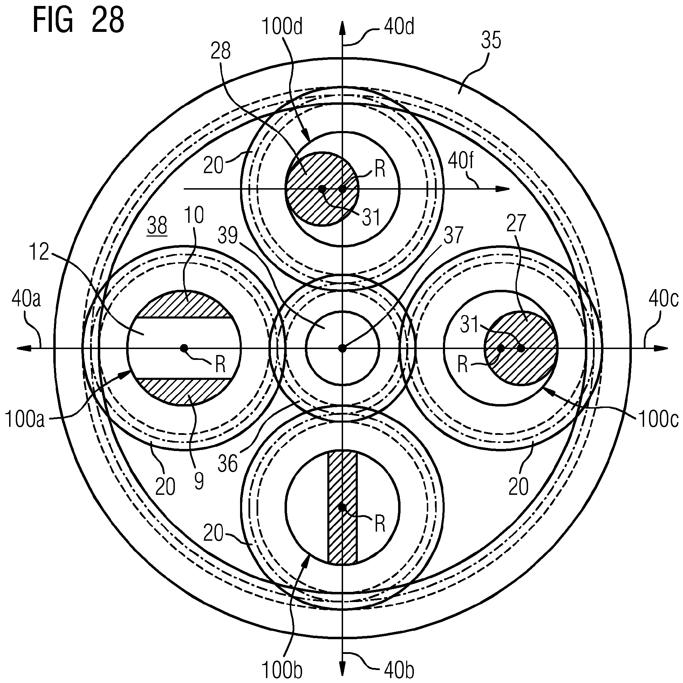

Fig. 28 dient der Veranschaulichung einer vorteilhaften Orientierung der im Lenkerbereich angeordneten Profile in Bezug auf das Gesamtsystem Planetengetriebestufe. Fig. 28 zeigt einen Querschnitt durch Lenkerbereiche 2 von Planetenachsen 100a, 110b, 110c und 100d einer Planetengetriebestufe mit einem feststehenden Hohlrad 35, einem drehbar gelagerten Sonnenrad 36, vier drehbar gelagerten Planetenrädern 20 mit Mittelachsen R und einem drehbar gelagerten Planetenträger mit einer Planetenträgerwange 38, in Blickrichtung entlang der zentralen Rotationsachse 37 des Planetenträgers. In die Planetenträgerwange 38 sind im rechten Winkel dazu gleichmäßig über den Umfang verteilt die vier Planetenachsen 100a, 100b, 100c, 100d eingespannt, auf welchen die Planetenräder 20 drehbar gelagert sind. Die Zähne der Planetenräder 20 kämmen mit dem den Planetenträger 38 umgebenden Hohlrad 35. Im axialen Zentrum 37 des Planetenträgers ist das Sonnenrad 36 angeordnet, welches ebenfalls mit den Planetenrädern 20 kämmt. Das Sonnenrad sitzt drehfest auf einer Sonnenradwelle 39, welche um die Rotationsachse 37 drehbar gelagert ist. Durch diese Konstruktion führt eine Drehung der Planetenträgerwange 38 um ihre Rotationsachse 37 zu einer schnelleren Drehung der Sonnenradwelle 39.

Eine erste Planetenachse 100a ist analog zu einer Querlenkerachse ausgebildet, mit einem Querschnitt im Lenkerbereich wie in Fig. 6 gezeigt. Dabei verläuft die Durchgangsbohrung 12 senkrecht zur Kreisbewegung der Planetenachse 100a um die Rotationsachse 37 des Planetenträgers; korrespondierend dazu verlaufen die beiden Querlenkerarme 9, 10 des Lenkerbereichs parallel zu einem radialen Strahl 40a, der an der Rotationsachse 37 des Planetenträgers beginnt und durch die Mittelachse R der Planetenachse 100a verläuft.

Eine zweite Planetenachse 100b ist analog zu einer Schub-/ Biegelenkerachse ausgebildet, mit einem Querschnitt im Lenkerbereich wie in Fig. 19 gezeigt. Dabei verläuft der Balken 25 des Lenkerbereichs entlang einem radialen Strahl 40b, der an der Rotationsachse 37 des Planetenträgers beginnt und durch die Mittelachse R der Planetenachse 100b verläuft.

Eine dritte Planetenachse 100c ist analog zu einer Längslenkerachse ausgebildet, mit einem Querschnitt im Lenkerbereich wie in Fig. 22 gezeigt. Dabei ist die Schwerachse 31 des exzentrisch angeordneten Profils 27 entlang eines radialen Strahls 40c, der an der Rotationsachse 37 des Planetenträgers beginnt und durch die Mittelachse R der Planetenachse 100c verläuft, um eine Distanz g gegenüber der Schwerachse 33 versetzt, in Richtung des Strahls.

Die Schwerachse 31 des Lenkerbereichs 2 ist also derart exzentrisch zur Mittelachse R der Planetenachse 100 ausgebildet, dass eine durch Schwerachse 31 und Mittelachse R aufgespannte Ebene senkrecht zur Kreisbahn des Planeten verläuft.

Eine vierte Planetenachse 100d ist analog zu einer Längslenkerachse ausgebildet, mit einem Querschnitt im Lenkerbereich wie in Fig. 22 gezeigt. Dabei ist die Schwerachse 31 des exzentrisch angeordneten Profils 28 quer zu einem radialen Strahl 40d, der an der Rotationsachse 37 des Planetenträgers beginnt und durch die Mittelachse R der Planetenachse 100d verläuft, um eine Distanz g gegenüber der Schwerachse 33 versetzt, und zwar entgegen der Richtung eines Strahls 40f, welcher parallel zum radialen Strahl 40c und durch die Mittelachse R der Planetenachse 100d verläuft.

Die Schwerachse 31 des Lenkerbereichs 2 ist also derart exzentrisch zur Mittelachse R der Planetenachse 100 ausgebildet, dass eine durch Schwerachse 31 und Mittelachse R aufgespannte Ebene tangential zur Kreisbahn des Planeten verläuft.

## Patentansprüche

1. Planetenachse (100) für ein Planetengetriebe, **dadurch gekennzeichnet, dass** die Planetenachse (100) zwischen einem Einspannungsbereich (1) zum Einspannen in eine Planetenträgerwange und einem Lagersitzbereich (3) zur Aufnahme eines Planetenlagers einen Lenkerbereich (2) aufweist, wobei die Schwerachse des Lenkerbereichs (2) exzentrisch zur Schwerachse des Lagersitzbereichs (15) und/oder zur Schwerachse des Einspannbereichs (14) ausgebildet ist.

2. Planetenachse (100) für ein Planetengetriebe, **dadurch gekennzeichnet, dass** die Planetenachse (100) zwischen einem Einspannungsbereich (1) zum Einspannen in eine Planetenträgerwange und einem Lagersitzbereich (3) zur Aufnahme eines Planetenlagers einen Lenkerbereich (2) mit zumindest einer quer zur Planetenachse verlaufenden Durchgangsöffnung (12) und zumindest zwei den Einspannungsbereich (1) und den Lagersitzbereich (3) verbindenden Querlenkerarmen (7, 8) aufweist.

3. Planetengetriebestufe mit einer Planetenachse (100) gemäß einem der vorhergehenden Ansprüche.

4. Planetengetriebestufe mit einer Planetenachse (100) gemäß Anspruch 2, wobei die Durchgangsöffnungen (12, 13) senkrecht zu einer Umlaufbahn der Planetenachse ausgerichtet sind.

5. Planetengetriebestufe mit einer Planetenachse (100) gemäß Anspruch 1, wobei die Schwerachse (31) des Lenkerbereichs (2) exzentrisch zur Mittelachse (R) der Planetenachse (100) ausgebildet ist, wobei eine durch Schwerachse (31) und Mittelachse (R) aufgespannte Ebene beliebig ausgerichtet sein kann, bevorzugt tangential oder senkrecht zur Kreisbahn des Planeten.

## Claims

1. Planetary axle (100) for a planetary gearbox, **characterised in that** the planetary axle (100) between a clamping area (1) for clamping in a planetary carrier side and a bearing seat area (3) for receiving a planetary bearing has a link area (2), wherein the centroidal axis of the link area (2) is embodied eccentrically with respect to the centroidal axis of the bearing seat area (15) and/or to the centroidal axis of the clamping area (14).

2. Planetary axle (100) for a planetary gearbox, **characterised in that** the planetary axle (100) between a clamping area (1) for clamping in a planetary carrier side and a bearing seat area (3) for receiving a planetary bearing has a link area (2) with at least one through opening (12) running at right angles to the planetary axle and at least two transverse link arms (7, 8) connecting the clamping area (1) and the bearing seat area (3).

3. Planetary gearbox stage with a planetary axle (100) according to one of the preceding claims.

4. Planetary gearbox stage with a planetary axle (100) according to claim 2, wherein the through openings (12, 13) are aligned at right angles to a circular path of the planetary axle.

5. Planetary gearbox stage having a planetary axle (100) according to claim 1, wherein the centroidal axis (31) of the link area (2) is embodied eccentrically with respect to the central axis (R) of the planetary axle (100), wherein a plane spanned by the centroidal axis (31) and central axis (R) can be aligned arbitrarily, preferably tangentially or at right angles to the circular path of the planet.

## Revendications

1. Axe (100) planétaire d'un train planétaire, **caractérisé en ce que** l'axe (100) planétaire a, entre une partie (1) de blocage pour le blocage dans une roue d'une cage planétaire et une partie (3) de siège de palier pour la réception d'un palier planétaire, une partie (2) de bras, l'axe, passant par le centre de gravité, de la partie (2) de bras étant excentré par rapport à l'axe passant par le centre de gravité, de la partie (15) de siège de palier et/ou par rapport à l'axe, passant par le centre de gravité, de la partie (14) de blocage.

2. Axe (100) planétaire d'un train planétaire, **caractérisé en ce que** l'axe (100) planétaire a, entre une partie (1) de blocage pour le blocage dans une joue de porte-satellite planétaire et une partie (3) de siège de palier pour la réception d'un palier planétaire, une partie (2) de bras ayant au moins une ouverture (12) traversante s'étendant transversalement à l'axe planétaire et au moins deux traverses (7, 8) de bras reliant la partie (1) de blocage et la partie (3) de siège de palier.

3. Etage de train planétaire ayant un axe (100) planétaire suivant l'une des revendications précédentes.

4. Etage de train planétaire ayant un axe (100) planétaire suivant la revendication 2, dans lequel les ouvertures (12, 13) traversantes sont dirigées perpendiculairement à une piste de roulement de l'axe planétaire.

5. Etage de train planétaire ayant un axe (100) planétaire suivant la revendication 1, dans lequel l'axe (31), passant par le centre de gravité, de la partie (2) de bras est excentré par rapport à l'axe (R) médian de l'axe (100) planétaire, un plan passant par l'axe (31), passant par l'axe de gravité, et par l'axe (R) médian pouvant être dirigé de manière quelconque, en étant de préférence tangent ou perpendiculaire à l'orbite du satellite.
